# EUROPEAN PATENT SPECIFICATION

(11) **EP 1 642 811 B1**
(45) Date of publication and mention of the grant of the patent: **27.04.2011**
(21) Application number: 05017243.6
(22) Date of filing: 08.08.2005
(51) Int. Cl.: B62J 17/04

(54) **Windscreen mounting structure in light vehicles**
Einrichtung zum Verstellen eines Windschildes für Fahrzeuge
Structure-support de pare-brise pour véhicule léger

(30) Priority: 30.09.2004 JP 2004287614
(43) Date of publication of application: 05.04.2006
(73) Proprietor: HONDA MOTOR CO., LTD., Tokyo (JP)
(72) Inventor: Misaki, Kenichi, 4-1-1, Chuo Wako-shi Saitama (JP)
(74) Representative: Rupp, Christian

(56) References cited:
- EP-A- 0 685 385
- DE-A1- 3 941 875
- US-A- 5 732 965
- US-A- 5 845 955
- US-B1- 6 254 166

## Description

The present invention relates to a windscreen mounting structure in a light vehicle such as a motorcycle and, more specifically, the one in which a mounting angle can be changed in a simple structure.

There is a technology in which a windscreen provided at a position in front of a rider at a front portion of a vehicle body such as a motorcycle is configured as a variable screen which can be adjusted freely in mounting angle or mounting height by a variable mechanism such as a link mechanism (See Patent Document 1).
In this application, the term "variable screen" represents a windscreen in which at least the mounting angle can be freely adjusted, and the term "variable mechanism" represents an adjusting mechanism for realizing the variable screen without re-mounting the windscreen.
[Patent Document 1] JP-A-2003-81160

Patent documents US 5, 732, 965 A, which is considered the closest prior art, and US 5,845,955 A relate to a mounting system for motorcycle accessories and, more particularly, to quickly detachable but secure mounting systems for accessories such as windshields, saddlebags and/or so-called travel trunks. The mounting system comprises a bracket assembly to be fitted tightly in a secure lock position over the upper portions of the fork assembly, a shield assembly, and a flange serving as an adjustable positioner for a moveable component of a docking assembly to which is secured a releasable, multi-position latching mechanism. The flange includes an elongated slot with enlarged diameter openings, and using fasteners to secure the flange to its associated docking assembly. Thereby, e.g. the windshield can be vertically adjusted in its height.

The variable screen employing the aforementioned link structure or the like has the complex variable mechanism and hence the number of components increases. Therefore, it has been difficult to employ the same in inexpensive vehicles. While the windscreen is effective by itself for preventing a high wind pressure during high speed travel, when attempt is made to cope with a higher wind pressure using the variable screen, supporting rigidity at a supporting portion of the windscreen including the variable mechanism must be enhanced, and hence the weight or the cost may further increase.

In order to solve the above-described problems, the invention according to Claim 1 relating to the invention of a windscreen mounting structure for light vehicles, the structure including a first stay suitable to be mounted at the front portion of a vehicle body, a windscreen mounted to the first stay and a second stay provided between the windscreen and the first stay, the structure being characterized in that said second stay is shaped in such a way that by inversion of its vertical mounting direction with respect to the first stay, the mounting angle of the windscreen is correspondingly varied.

In the aforementioned Claim 1, the invention according to Claim 2 is characterized in that the second stay is formed substantially into a Z-shape, and is connected with the first stay at one end in the longitudinal direction and is connected with the windscreen at the other end thereof.

In the aforementioned Claim 1 or 2, the invention according to Claim 3 is characterized in that the second stay is connected with the first stay at a longitudinal midsection, and is connected with the windscreen at longitudinal both ends with the intermediary of the connecting portion with respect to the first stay.

In the aforementioned Claims 1 to 3, the invention according to Claim 4 is characterized in that the second stay is configured in such a manner that the connecting surface with respect to the first stay and the connecting surface with respect to the windscreen are not in parallel, and the mounting angle of the windscreen is adjusted by inverting the second stay to invert the connecting portion with respect to the windscreen in the vertical direction.

In the aforementioned Claims 1 to 4, the invention according to Claim 5 is characterized in that the second stay is connected to the windscreen by fastening operation and elongated hole structure is provided at a fastening position.

According to Claim 1 of the invention, since the variable screen can be configured without employing the variable mechanism such as a link structure, complexity and increase in number of components as in the case in which the variable mechanism is employed are prevented, and reduction in cost is achieved.

Also, since the variable mechanism does not exist and re-mounting of the windscreen is required for changing the mounting angle or the like of the windscreen, there is no risk of erroneous change in mounting angle. In particular, since it cannot happen that the variable mechanism is operated during travel, the mounting angle is not changed by wind pressure or vibrations. Therefore, it is not necessary to adapt it to have specifically high rigidity, and a higher wind pressure or vibrations during high speed travel can be coped with.

Therefore, the windscreen which is effective when being exposed to a high wind pressure, for example, during high speed travel can be mounted in a simple structure, in a light weight, and at a low cost, whereby it can be employed in inexpensive vehicles easily.

Moreover, the mounting angle of the windscreen by the second stay can be varied by changing the mounting direction with respect to the first stay, for example, by inverting the second stay in the vertical direction. Therefore, the variable screen can be realized with a simple structure only with the second stay without provision of the variable mechanism.

According to Claim 2 of the invention, the second stay can be formed easily by forming it substantially into a Z-shape, connecting one end in the longitudinal direction with the first stay, and connecting the other end with the windscreen.

According to Claim 3 of the invention, the second stay can be formed easily by connecting the longitudinal midsection with the first stay, and connecting with the windscreen at the longitudinal both ends with the intermediary of the connecting portion with respect to the first stay. In addition, a span for supporting the windscreen at the connecting portions with respect to the windscreen can be increased to achieve stable support.

According to Claim 4 of the invention, since the second stay is configured in such a manner that the connecting surface with respect to the first stay and the connecting surface with respect to the windscreen are not in parallel to each other, by inverting the second stay to invert the connecting portion with respect to the wind screen in the vertical direction, the angle of the connecting surface with respect to the windscreen is changed. Therefore, when the windscreen is mounted thereto, the mounting angle of the windscreen is changed. Therefore, the mounting angle of the windscreen can be changed only by inverting mounting direction of the second stay.

According to Claim 5 of the invention, since the elongated hole structure is provided at the portion of the second stay to be connected with the windscreen, displacement of the fastening position can be compensated by the elongated hole structure when fastening the second stay to the windscreen. Therefore, the second stay and the windscreen can be connected easily by fastening operation.
Fig. 1 is a side view of a motorcycle to which the present embodiment is applied.
Fig. 2 is a partly broken side view showing a mounting structure of a windscreen.
Fig. 3 is a front view of a mounting portion of the windscreen.
Fig. 4 is a plan view of the same.
Fig. 5 is a perspective view of an angle adjusting stay.
Fig. 6 is a front view of the windscreen.
Fig. 7 is an exploded view showing the mounting structure of the windscreen.
Fig. 8 is a cross-sectional view of a fastening portion of the angle adjusting stay.
Fig. 9 is a schematic side view showing the change in mounting angle of the windscreen.
Fig. 10 is a front view of the same.
Fig. 11 is a perspective view of the angle adjusting stay according to another embodiment of the invention.
Fig. 12 is a perspective view showing the change in mounting angle of the windscreen.

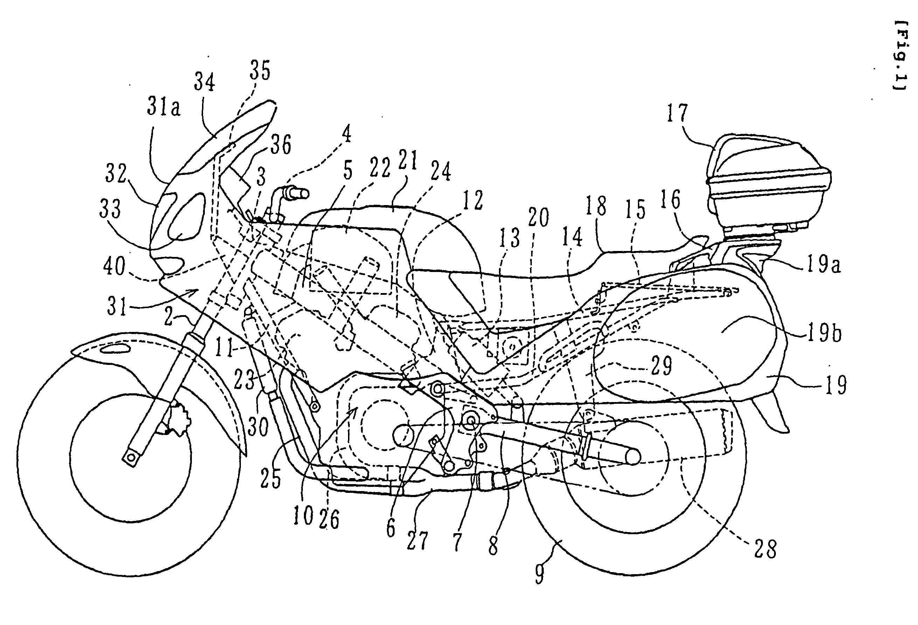

Referring now to drawings, an embodiment will be described. Fig. 1 is a left side view of a motorcycle to which the invention of the present application is applied. A pair of left and right front forks 2 which support a front wheel 1 at a lower end thereof are connected to a head pipe 3 at an upper end thereof and are capable of being steered by a handle 4.

The head pipe 3 is mounted to front ends of main frames 5. The main frames 5 extend from the head pipe 3 rearward and outward to the left and right sides in pair and pivot plates 6 are mounted to the respective rear ends thereof. The pivot plates 6, being substantially in a L-shape in side view, are provided in left and right pair, and support both ends of a pivot shaft 7 which extends therebetween.

Front ends of rear swing arms 8 are pivotally supported on the pivot shaft 7. A rear wheel 9 is supported at rear ends of the rear swing arms 8. A water-cooled four-cycle fore-and-aft V-type engine 10 is disposed below the main frames 5. The engine 10 is supported by the main frames 5, the pivot plates 6, and a down tube 11 extending obliquely downward from the head pipe 3 toward the rear.

Stays 12 projecting upward are provided integrally at the respective front ends of the left and right pivot plates 6 in left and right pair, and rear cushions 13 which constitute rear wheel suspensions are connected between the stays 12 and the front upper surfaces of the rear swing arms 8. Front ends of upper supporting portions 14 of seat rails are mounted to the upper portions of the respective stays 12. The upper supporting portions 14 of the seat rails are provided in left and right pair, and extend obliquely upward toward the rear, and rear ends of substantially horizontal reinforcing pipe members 15 are connected to the respective rear ends of the seat rails.

Disposed above the reinforcing pipe members 15 are grab rails 16 and a trunk box 17 is supported on rear extensions of the grab rails 16. A seat 18 for two persons is disposed in front of the grab rails 16 and supported by the upper supporting portions 14 of the seat rails. A rear cover 19 is supported below the seat 18. Reference numeral 19a designates a tail lamp, and reference numeral 19b designates a side trunk having a relatively large capacity.

Below the upper supporting portions 14 of the seat rails, there are provided a left and right pair of lower supporting portions 20 of the seat rails, and respective front ends thereof are connected to the rear portion of the engine 10, and rear ends are connected to the rear ends of the upper supporting portions 14 of the seat rails. The upper supporting portions 14 of the seat rails and the lower supporting portions 20 of the seat rails constitute the seat rails.

A fuel tank 21 is disposed in front of the seat 18 and above the engine 10, and supported above the main frames 5 and the pivot plates 6. An air cleaner 22 is integrated inside the front portion of the fuel tank 21, and supplies air to a front cylinder 23 and a rear cylinder 24 of the engine 10 respectively.

A front exhaust pipe 25 and a rear exhaust pipe 26 extend from the respective exhaust ports of the front cylinder 23 and the rear cylinder 24, and converge below the engine 10 to form a collective tube 27, which is connected to a rear muffler 28. The collective tube 27 is supported at the rear end of the pivot plate 6, and the muffler 28 is disposed on the side of the rear wheel 9 and supported by a stay 29 extending downward from the lower supporting portion 20 of the seat rail. A radiator 30 is supported by the down tube 11 in front of the front cylinder 23, and cools the front cylinder 23 and the rear cylinder 24 by water.

A front portion of the vehicle body is covered by a front cowl 31, and a front end portion 31a thereof covers a headlight 32 in front of the head pipe 3. Front winkers 33 are provided on the sides of the front end portion 31a. A windscreen 34 is disposed above the front end portion 31a, and is supported by the head pipe 3 via a windscreen supporting stay 35. Reference numeral 36 designates an instrument.

The windscreen 34 is a separate member from the front cowl 31, and is detachably mounted to an upper portion of the windscreen supporting stay 35 which corresponds to a first stay at a predetermined inclination angle. The mounting angle can be selected from two angles as will be described later. The lower portion of the windscreen supporting stay 35 is mounted to a stay 40 projecting forward from the head pipe 3.

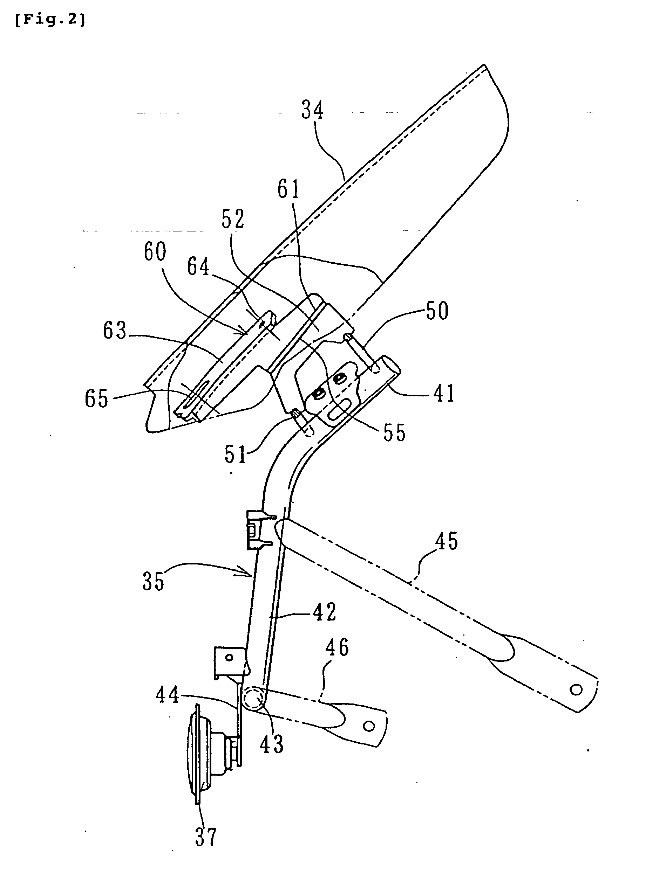

Fig. 2 is a partly broken side view showing a mounting structure of the windscreen 34 in an enlarged scale. The upper end of the windscreen supporting stay 35 corresponds to an obliquely inclined screen supporting portion 41, and a screen mounting bracket 52 is fixed via cross wires 50, 51. An angle adjusting stay 60 which is bent substantially in a Z-shape or substantially in a crank-shape is detachably attached to a mounting surface 55, which corresponds to the upper surface of the screen mounting bracket 52. The angle adjusting stay 60 corresponds to a second stay, and the windscreen 31 is detachably mounted to an upper surface thereof.

The portion of the windscreen supporting stay 35 lower than the screen supporting portion 41 is a side portion 42 which extends downward substantially in the vertical direction in side view. There are a pair of the left and right screen supporting portions 41 and a pair of the left and right side portions 42, and a portion connecting the respective lower ends corresponds to a cross portion 43 which continuously connects the left and right members. The cross portion 43 is supported by being mounted to the stay 40 (Fig. 1), and a horn 37 is supported via a stay 44 which is mounted at one end to the midsection thereof. Reference numerals 45, 46 in the drawing designate supporting stay for connecting the windscreen supporting stay 35 and the head pipe 3 side, which are provided as needed.

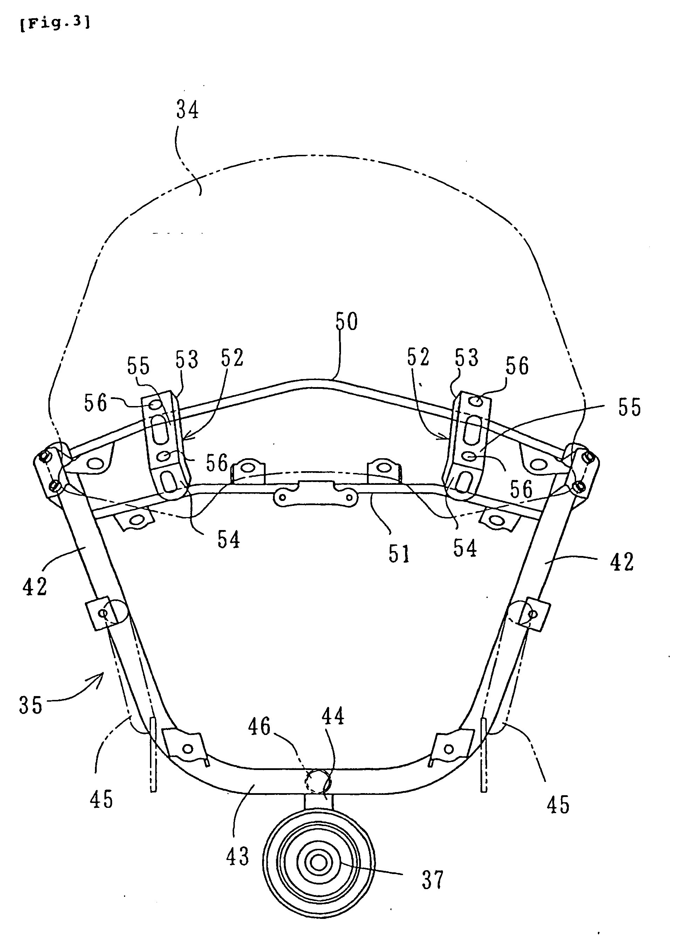

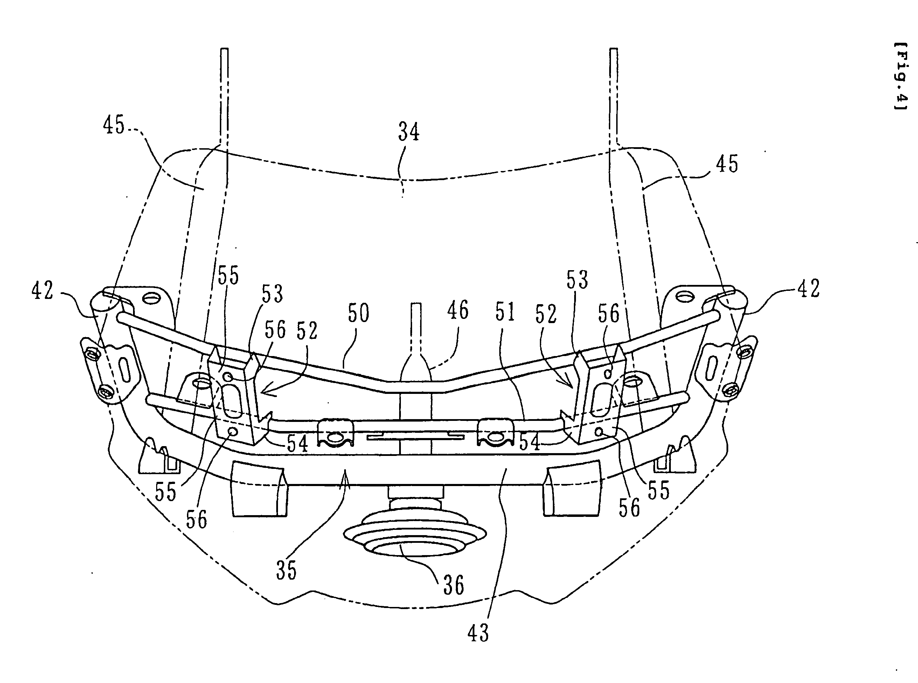

Fig. 3 is a front view of the windscreen supporting stay 35, and Fig. 4 is a plan view of the same. In these drawings, the cross wires 50, 51 are extended substantially in an arched-shape between the left and right screen supporting portions 41 on the upper side and the lower side, and screen mounting brackets 52 are mounted between these cross wires on the left and right sides so as to extend longitudinally in the vertical direction. The cross wires 50, 51 are bent so as to project forward and upward so as to extend along a forwardly projecting curved surface which is defined by an inner surface of the front cowl 31. The inclination angle of the mounting surface 55 (Fig. 4) of the screen mounting bracket 52 is a reference mounting angle, which is rather larger than that of the screen supporting portion 41. The mounting surface 55 is directed rather outward so as to extend along the inner surface of the front cowl 31.

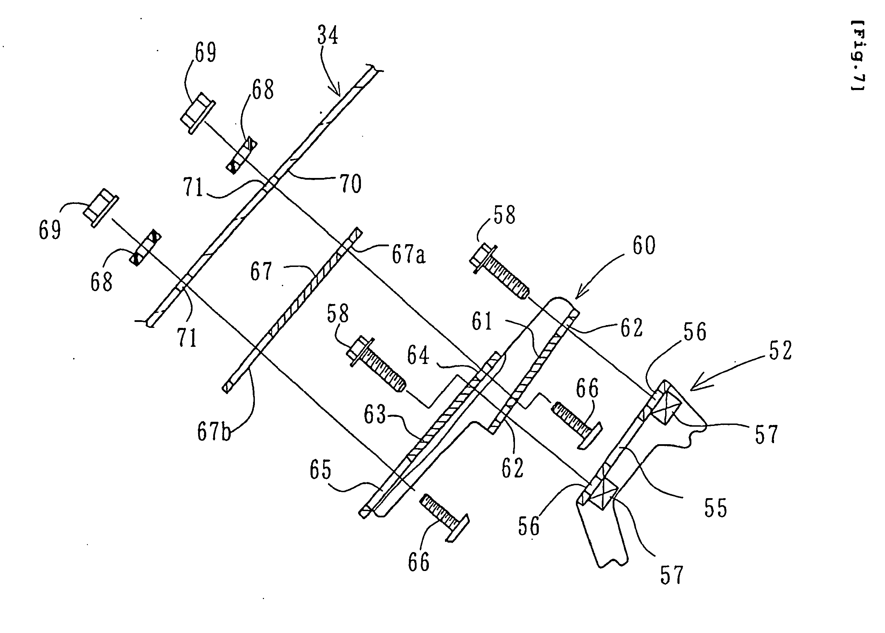

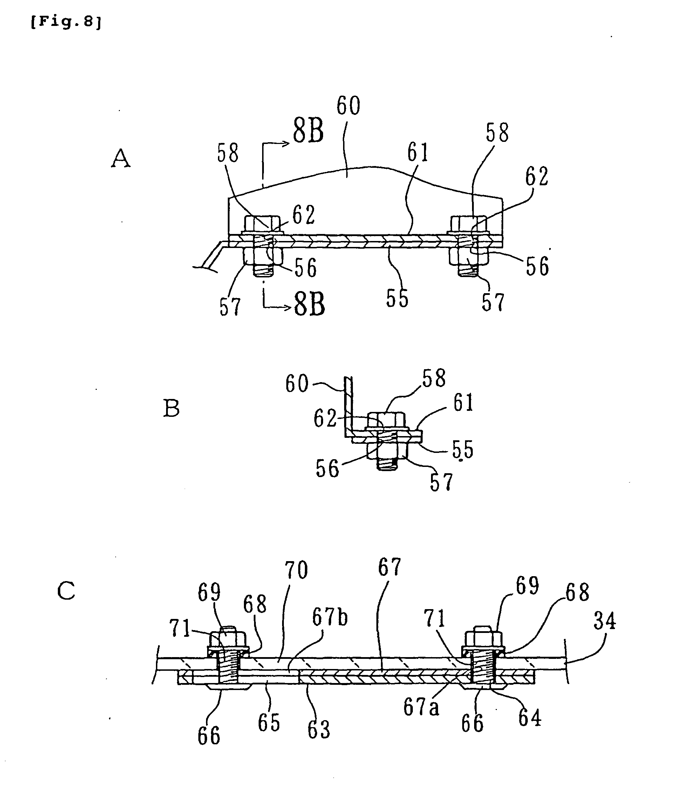

The screen mounting bracket 52 is provided with leg portions 53, 54 bent respectively at the upper end and the lower end thereof, and are attached to the cross wire 50 and the cross wire 51 by welding or the like. The length and the angle of the leg portions 53, 54 are different from each other. As show in Fig. 3, the longitudinal upper and lower ends of the mounting surfaces 55 of the screen mounting brackets 52 are formed with mounting holes 56, respectively. At positions on back sides of the mounting surfaces 55 corresponding to the respective mounting holes 56, there are provided weld nuts 57 (Fig. 7 and Fig. 8).

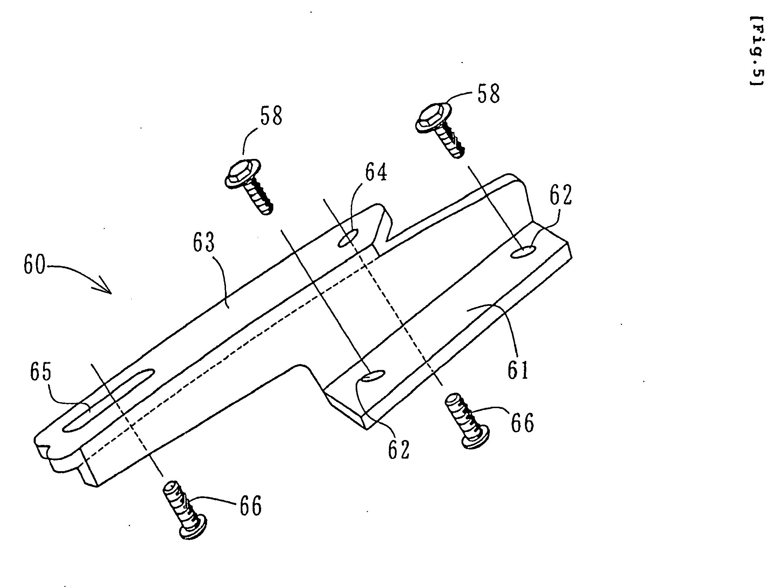

Fig. 5 is a perspective view of the angle adjusting stay 60. The angle adjusting stay 60 is formed by press molding a metal plate or the like and includes a lower mounting portion 61 and an upper mounting portion 63 which serve as stepped fastening surfaces by being bent in the opposite direction from each other at opposite positions in the longitudinal direction and in the widthwise direction. The lower mounting portion 61 is formed with through holes 62 on a lower surface thereof, and is mounted to the mounting surface 55 by bolts 58. The upper mounting portion 63 is formed with a through hole 64 and an elongated hole 65 at both ends in the longitudinal direction, and is mounted to the windscreen 34 by bolts 66.

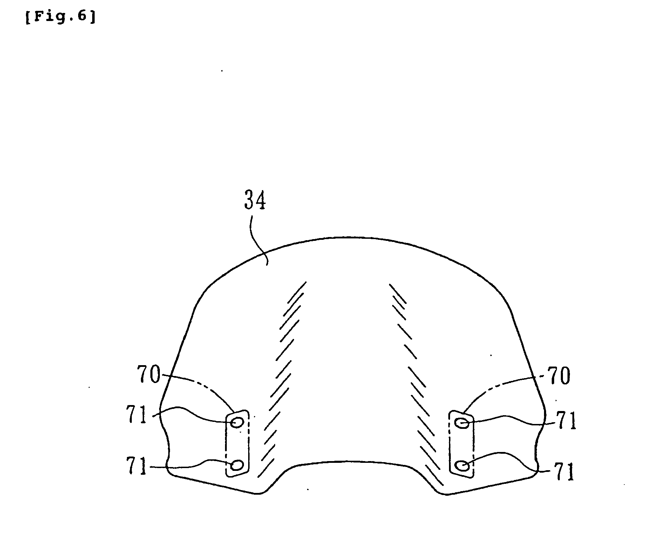

Fig. 6 shows contour of the windscreen 34 in front view. The windscreen 34 formed of transparent resin is provided with mounting seats 70 shown by imaginary lines at lower left and right portions so as to extend in the longitudinal direction and a pair of mounting holes 71 are provided on the upper side and the lower side thereof, respectively.

Fig. 7 is a mounting view of the windscreen 34, the angle adjusting stay 60 and the screen mounting bracket 52, and the respective members are shown in pattern diagram in cross-section. The angle adjusting stay 60 is detachably mounted to the screen mounting bracket 52 by aligning the through holes 62 of the lower mounting portion 61 with the mounting holes 56 on the screen mounting bracket 52, and fastening the bolts 58 from above.

The upper mounting portion 63 is provided with the through hole 64 of a round-shape and the elongated hole 65 at the both ends in the longitudinal direction, and is adapted to pass the bolts 66 from below. The windscreen 34 is mounted to the windscreen supporting stay in a vibration-proof manner via the angle adjusting stay 60 by overlapping the mounting seat 70 of the windscreen 34 to the upper mounting portion 63 via a spacer 67, causing the distal ends of the bolts 66 to project upward (forward) from the mounting holes 71, and fastening from above by nuts 69 via rubber washers 68.

Fig. 8 is a cross-sectional view showing a mounting structure of the angle adjusting stay 60, in which A shows a mounting structure of the lower mounting portion 61, B is a cross-sectional view taken along a line 8B-8B in A, and C shows a mounting structure of the upper mounting portion 63. In A and B, the lower mounting portion 61 of the angle adjusting stay 60 is overlapped on the mounting surface 55 of the screen mounting bracket 52 to align the through holes 62 and the mounting holes 56. When the bolts 58 are passed from above and tightened to the weld nut 57 in this state, the lower mounting portion 61 of the angle adjusting stay 60 is fixed on the mounting surface 55 of the screen mounting bracket 52.

Subsequently, as shown in C, the spacer 67 is overlapped on the upper mounting portion 63, holes 67a, 67b corresponding to the through hole 64 and the elongated hole 65 formed on the upper mounting portion 63 are aligned to each other, the mounting seat 70 of the windscreen 34 is overlapped thereon with the upper mounting holes 71, the respective through holes 67a, 67b, and 64, 65 aligned to each other, the bolts 66 are passed through these through holes from the back side until they are projected upward and tightened with the nuts 69 via the rubber washers 68 from above. Accordingly, the windscreen 34 is fixed to the upper mounting portion 63 of the angle adjusting stay 60.

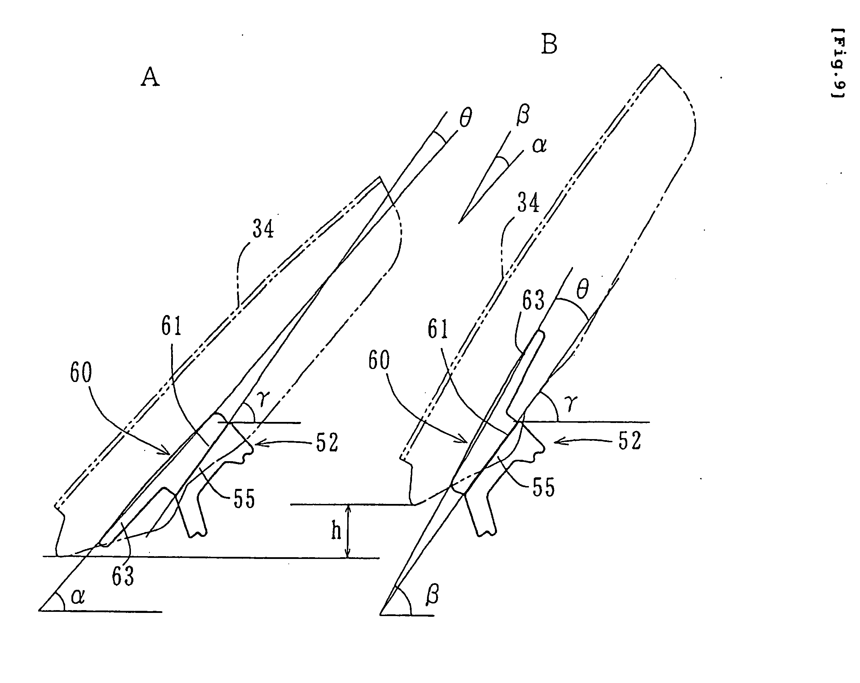

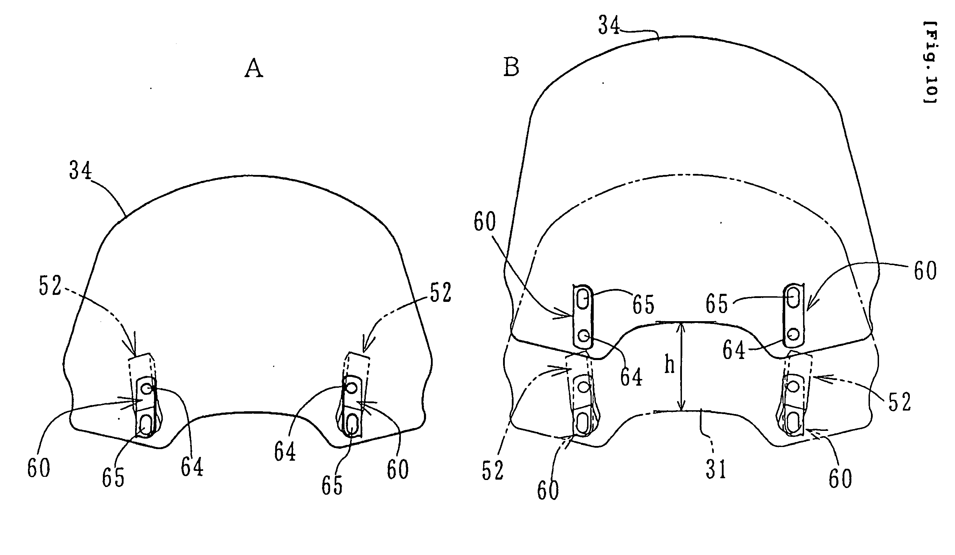

Subsequently, the operation of the present embodiment will be described. Fig. 9 is a schematic side view showing two different mounting modes of the windscreen 34, and Fig. 10 is a front view of the same. In the respective drawings, A represents a state in which the mounting angle α is set to a moderate inclination, and B represents a state in which the mounting angle β is set to a steep inclination. The difference between the mounting angles α and β is determined by the mounting direction of the angle adjusting stay 60.

In other words, when the angle adjusting stay 60 is mounted to the screen mounting bracket 52 in such a manner that the upper mounting portion 63 projects downward in the drawing, the windscreen 34 mounted to the upper mounting portion 63 assumes the inclination angle α as shown in A of each drawing at a low mounting position with a moderate inclination angle.

When the angle adjusting stay 60 is inverted in the vertical direction and is mounted to the screen mounting bracket 52 in such a manner that the upper mounting portion 63 projects upward, and the windscreen 34 is mounted to the upper mounting portion 63, as shown in B in each drawing, the windscreen 34 assumes the inclination angle β and changes to a high mounting position with a steep angle.

As shown in Fig. 9, the respective fastening surfaces of the lower mounting portion 61 and the upper mounting portion 63 are not parallel to each other, and have an angular difference θ therebetween. Therefore, assuming that the reference angle of the mounting surface 55 of the screen mounting bracket 52 with respect to horizontal direction is γ, when the angle adjusting stay 60 is inverted in the vertical direction on this mounting surface 55, the inclination angle of the fastening surface of the upper side mounting portion 63 is α(=γ-θ) , or β(=γ+θ) , and hence the mounting angle of the windscreen 34 changes between α and β (α<β). Simultaneously, since the position of the upper mounting portion 63 changes in the vertical direction, the mounting height of the windscreen 34 changes by h.

Therefore, the mounting angle and the mounting height of the windscreen 34 can be changed by a simple operation to invert the mounting direction of the angle adjusting stay 60 in the vertical direction. In addition, since the angle adjusting stay 60 has a simple structure in which a variable mechanism is not provided and hence the angle cannot be adjusted, it cannot happen that the variable mechanism is operated during travel, and hence the mounting angle is not changed by wind pressure or vibrations, whereby supporting rigidity of the windscreen 34 can be enhanced.

Also, since the angle adjusting stay 60, which corresponds to the second stay, has a plurality of mounting method, and hence the mounting surface of the windscreen 34 assumes different angles, the variable screen can be achieved without using the variable mechanism such as the link structure. Therefore, a complicated structure with a large number of components as in the case where the variable mechanism is employed may be avoided and hence reduction of the cost can be realized. In addition, since the variable mechanism does not exist and hence it is necessary to re-mount the windscreen 34 in order to change the mounting angle or the like of the windscreen 34, there is no risk of erroneous change in mounting angle. In particular, since it cannot happen that the variable mechanism is operated during travel, the mounting angle is not changed by wind pressure or vibrations. Therefore, it is not necessary to adapt it to have specifically high rigidity, and a higher wind pressure or vibrations during high speed travel can be coped with.

Consequently, the windscreen 34 which is effective when being exposed to a high wind pressure, for example, during high speed travel can be mounted in a simple structure, in a light weight, and at a low cost, whereby it can be employed in inexpensive vehicles easily and the variable screen can be formed easily.

In addition, the angle adjusting stay 60 is formed substantially into a Z-shape, the lower mounting portion 61 at one end in the longitudinal direction is fastened to the screen mounting bracket 52 on the side of the windscreen supporting stay 35, and the upper mounting portion 63 on the side of the other end is connected with the windscreen 34. Therefore, the angle adjusting stay 60 can be formed easily.

In addition, since the elongated hole 65 is formed on the upper mounting portion 63, when the angle adjusting stay 60 is inverted in the vertical direction and is fastened by the bolts 66 with the through hole 64 and the elongated hole 65 aligned with the through holes 71 of the windscreen 34, displacement of the through hole 64 with respect to the through hole 71 can be compensated by the elongated hole 65. Therefore, displacement of the fastening position in association with vertical inversion of the angle adjusting stay 60 can be compensated, whereby the angle adjusting stay 60 and the windscreen 34 can be connected easily by fastening operation.

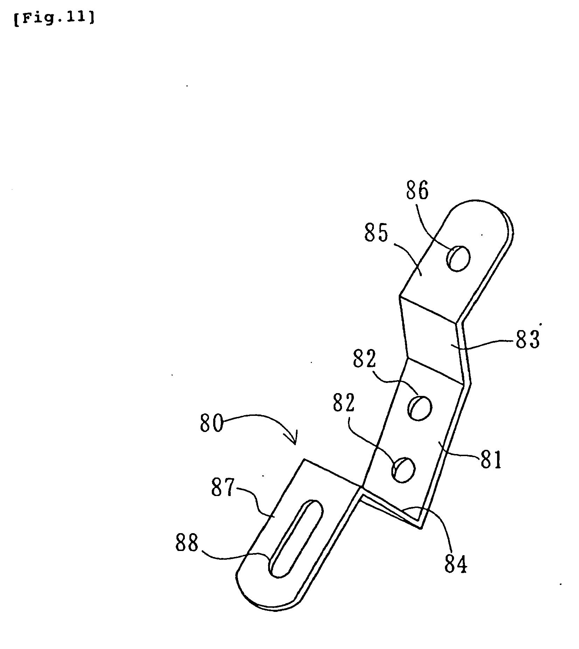

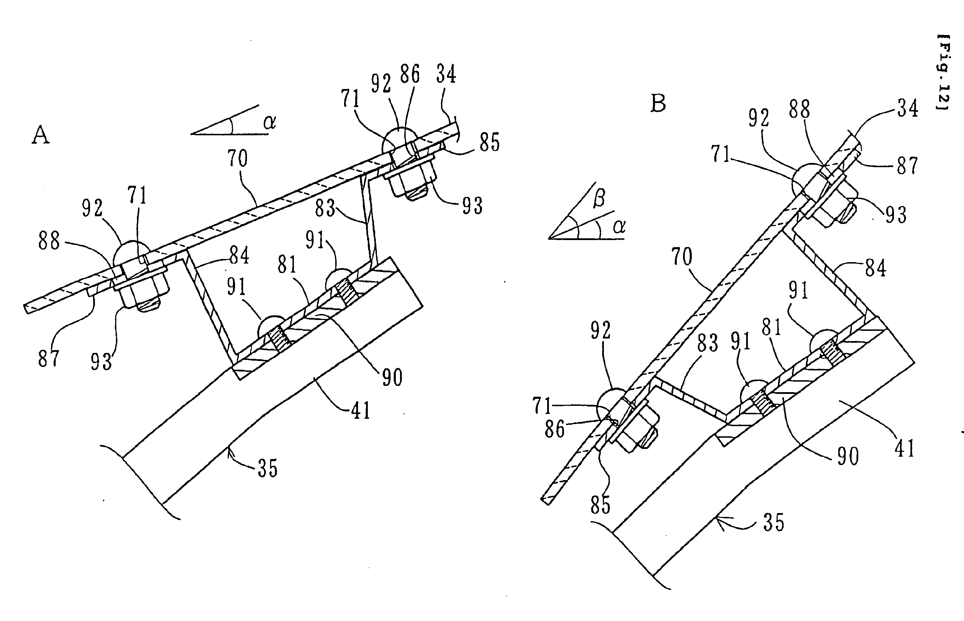

Figs. 11 and 12 show another embodiment in which the structure of the angle adjusting stay is modified. The common parts to the foregoing embodiment are represented by the common reference numerals.
Fig. 11 shows a perspective view of an angle adjusting stay 80 in this embodiment. The angle adjusting stay 80 is formed substantially into a C-shape at the center portion thereof, and constitutes the lower mounting portion 81 by the bottom portion thereof, where a pair of through holes 82 are formed in the longitudinal direction. The lower mounting portion 81 constitutes a vehicle-side fastening surface for fastening the windscreen supporting stay 35 with respect to the upper screen supporting portion 41.

The both sides in the longitudinal direction of the lower mounting portion 81 include rising portions 83, 84 which are bent upward. The rising portions 83, 84 are different in length and inclination angle, and the upper end of the shorter rising portion 83 with moderate inclination is bent outward to form a first upper mounting portion 85, where a through hole 86 is formed.

The other rising portion 87 is longer and inclined steeply, and the upper end thereof is also bent outward to form the second upper mounting portion 87 which extends in the direction opposite from the first upper mounting portion 85, where an elongated hole 88 is formed. The first upper. mounting portion 85 and the second upper mounting portion 87 are provided on the both sides in the longitudinal direction with the intermediary of the lower mounting portion 81, and the upper surfaces thereof respectively constitute screen-side fastening surfaces, which are fastening surfaces in a common plane to be fastened to the windscreen 34. The screen-side fastening surfaces are not parallel with the vehicle-side fastening surface. The angular difference between the both fastening surfaces is determined so that the mounting angle is changed as described later.

Fig. 12 is a drawing showing two different mounting modes of the windscreen 34. A represents a state in which the mounting angle α is set to a moderate inclination, and B represents a state in which the mounting angle β is set to a steep inclination. These mounting angles α and β are the same as in the foregoing embodiment, and the change in mounting angle is determined by the mounting direction of the angle adjusting stay 80.

In other wards, as shown in A, when the lower mounting portion 81 is fastened to the upper screen supporting portion 41 of the windscreen supporting stay 35 with the first upper mounting portion 85 of the angle adjusting stay 80 directed upward and the second upper mounting portion 87 directed downward, the mounting angle of the screen-side fastening surfaces including the first upper mounting portion 85 and the second upper mounting portion 87 is α.

On the other hand, as shown in B, when it is mounted to the screen supporting portion 41 with the angle adjusting stay 80 inverted in the vertical direction, the mounting angle of screen-side fastening surface including the first upper mounting portion 85 and the second upper mounting portion 87 is β, which is a steeper angle.

In this arrangement, the mounting angle of the windscreen 34 can be changed only by inverting the angle adjusting stay 80 in the vertical direction as in the foregoing embodiment. Also, since the first upper mounting portion 85 and the second upper mounting portion 87 are provided at longitudinal both ends with the intermediary of the lower mounting portion 81, thereby fastening the windscreen 34 thereto, the mounting span between the angle adjusting stay 80 and the windscreen 34 is increased whereby the windscreen 34 can be supported further stably. In addition, high rigidity is achieved with a simple structure. Furthermore, the mounting property can be improved by the elongated hole 88 formed on the second upper mounting portion 87 as in the case of the foregoing embodiment. The elongated hole 88 can be formed on the side of the first upper mounting portion 85.

The invention of the present application is not limited to the respective embodiments described above, and may be modified or applied in various manner within the principle of the invention. For example, connection between the angle adjusting stays 60, 80 with respect to the windscreen 34 and the windscreen supporting stay 35 may be achieved not only by fastening, but also by employing other connecting means as long as they are detachably attachable. The invention of the present application can be applied not only to motorcycles, but also to various types of light vehicles such as automotive three-wheelers or buggies, as long as they are provided with a windscreen.

34: windscreen, 35: windscreen supporting stay (first stay), 41; screen supporting portion, 52: screen mounting bracket, 60: angle adjusting stay (second stay), 61: lower mounting portion, 63: upper mounting portion, 65: elongated hole, 70: mounting seat, 80: angle adjusting stay (second stay), 81: lower mounting portion, 85: first upper mounting portion, 87: second upper mounting portion, 88: elongated hole

## Claims

1. A windscreen mounting structure for light vehicles, the structure including a first stay (35) suitable to be mounted at the front portion of a vehicle body, a windscreen (34) mounted to the first stay (35) and a second stay (60, 80) provided between the windscreen (34) and the first stay (35),
the structure being **characterized in that**
said second stay (60, 80) is shaped in such a way that by inversion of its vertical mounting direction with respect to the first stay (35), the mounting angle of the windscreen (34) is correspondingly varied.

2. The windscreen mounting structure for light vehicles according to claim 1, **characterized in that** the second stay (80) is formed substantially into a Z-shape, and is connected with the first stay (35) at one end in the longitudinal direction and is connected with the windscreen (34) at the other end thereof.

3. The windscreen mounting structure for light vehicles according to any of the preceding claims, **characterized in that** the second stay (80) is connected with the first stay (35) at a longitudinal midsection, and is connected with the windscreen (34) at longitudinal both ends with the intermediary of the connecting portion with respect to the first stay (35).

4. The windscreen mounting structure for light vehicles according to any of the preceding claims, **characterized in that** the second stay (80) is configured in such a manner that the connecting surface with respect to the first stay (35) and the connecting surface with respect to the windscreen (34) are not in parallel, and the mounting angle of the windscreen (34) is adjusted by inverting the second stay (80) to invert the connecting portion with respect to the windscreen (34) in the vertical direction.

5. The windscreen mounting structure for light vehicles according to any of the preceding claims, **characterized in that** the second stay (80) is connected with the windscreen (34) by fastening operation and elongated hole structure is provided at a fastening position.

6. A method for varying the mounting angle of a windscreen in the windscreen mounting structure of claim 1, the method comprises the step of:
providing a second stay (60, 80) between a first stay (35) and the windscreen (34),
providing the second stay (80) in such a shape that by inversion of its vertical mounting direction with respect to the first stay (35), the mounting angle of the windscreen (34) is accordingly varied.

## Patentansprüche

1. Windschutzscheibenmontagekonstruktion für leichte Fahrzeuge, wobei die Konstruktion eine erste Abstützung (35), welche geeignet ist, um an dem vorderen Abschnitt einer Fahrzeugkarosserie montiert zu werden, eine Windschutzscheibe (34), welche an der ersten Abstützung (35) montiert ist, und eine zweite Abstützung (60, 80) aufweist, welche zwischen der Windschutzscheibe (34) und der ersten Abstützung (35) vorgesehen ist,
wobei die Konstruktion **dadurch gekennzeichnet ist, dass** die zweite Abstützung (60, 80) auf solch eine Weise geformt ist, dass durch Umkehrung ihrer vertikalen Montagerichtung hinsichtlich der ersten Abstützung (35) der Montagewinkel der Windschutzscheibe (34) entsprechend variiert wird.

2. Windschutzscheibenmontagekonstruktion für leichte Fahrzeuge gemäß Anspruch 1, **dadurch gekennzeichnet, dass** die zweite Abstützung (80) im Wesentlichen in einer Z-Form gebildet ist, und mit der ersten Abstützung (35) an einem Ende in der longitudinalen Richtung verbunden ist, und mit der Windschutzscheibe (34) an dem anderen Ende davon verbunden ist.

3. Windschutzscheibenmontagekonstruktion für leichte Fahrzeuge gemäß irgendeinem der vorherigen Ansprüche, **dadurch gekennzeichnet, dass** die zweite Abstützung (80) mit der ersten Abstützung (35) an einem longitudinalen Mittelabschnitt verbunden ist, und mit der Windschutzscheibe (34) an beiden longitudinalen Enden mit dem Zwischenstück des Verbindungsabschnitts hinsichtlich der ersten Abstützung (35) verbunden ist.

4. Windschutzscheibenmontagekonstruktion für leichte Fahrzeuge gemäß irgendeinem der vorherigen Ansprüche, **dadurch gekennzeichnet, dass** die zweite Abstützung (80) auf solch eine Weise konfiguriert ist, dass die Verbindungsoberfläche hinsichtlich der ersten Abstützung (35) und die Verbindungsoberfläche hinsichtlich zu der Windschutzscheibe (34) nicht parallel sind, und dass der Montagewinkel (34) durch Invertieren der zweiten Abstützung (80) eingestellt wird, um den Verbindungsabschnitt hinsichtlich zu der Windschutzscheibe (34) in der vertikalen Richtung zu invertieren.

5. Windschutzscheibenmontagekonstruktion für leichte Fahrzeuge gemäß irgendeinem der vorherigen Ansprüche, **dadurch gekennzeichnet, dass** die zweite Abstützung (80) mit der Windschutzscheibe (34) durch eine Befestigungsoperation verbunden wird, und eine verlängerte Lochstruktur an der Befestigungsposition vorgesehen ist.

6. Verfahren zum Variieren des Montagewinkels einer Windschutzscheibe in der Windschutzscheibenmontagekonstruktion gemäß Anspruch 1, wobei das Verfahren den Schritt umfasst des:
Vorsehens einer zweiten Abstützung (60, 80) zwischen einer ersten Abstützung (35) und der Windschutzscheibe (34),
Vorsehens der zweiten Abstützung (80) auf solch eine Weise, dass durch Inversion von ihrer vertikalen Montagerichtung hinsichtlich zu der ersten Abstützung (35) der Montagewinkel der Windschutzscheibe (34) entsprechend variiert wird.

## Revendications

1. Structure de montage de pare-brise pour véhicules légers, la structure comprenant un premier support (35) approprié pour être monté sur la partie avant d'un châssis de véhicule, un pare-brise (34) monté sur le premier support (35) et un deuxième support (60, 80) prévu entre le pare-brise (34) et le premier support (35),
la structure étant **caractérisée en ce que**
ledit deuxième support (60, 80) est formé d'une manière telle que, par l'inversion de sa direction de montage verticale par rapport au premier support (35), l'angle de montage du pare-brise (34) est modifié de manière correspondante.

2. Structure de montage de pare-brise pour véhicules légers selon la revendication 1, **caractérisée en ce que** le deuxième support (80) est réalisé sensiblement en forme de Z, et est relié au premier support (35) à une extrémité dans la direction longitudinale et est relié au pare-brise (34) à son autre extrémité.

3. Structure de montage de pare-brise pour véhicules légers selon l'une quelconque des revendications précédentes, **caractérisée en ce que** le deuxième support (80) est relié au premier support (35) au niveau d'une section centrale longitudinale, et est relié au pare-brise (34) aux deux extrémités longitudinales par l'intermédiaire de la partie de liaison par rapport au premier support (35).

4. Structure de montage de pare-brise pour véhicules légers selon l'une quelconque des revendications précédentes, **caractérisée en ce que** le deuxième support (80) est configuré d'une manière telle que la surface de liaison par rapport au premier support (35) et la surface de liaison par rapport au pare-brise (34) ne sont pas parallèles, et l'angle de montage du pare-brise (34) est ajusté en inversant le deuxième support (80) pour inverser la partie de liaison par rapport au pare-brise (34) dans la direction verticale.

5. Structure de montage de pare-brise pour véhicules légers selon l'une quelconque des revendications précédentes, **caractérisée en ce que** le deuxième support (80) est relié au pare-brise (34) par une opération de fixation et une structure à trous allongés est prévue à une position de fixation.

6. Procédé pour faire varier l'angle de montage d'un pare-brise dans la structure de montage de pare-brise de la revendication 1, le procédé comprenant l'étape consistant à :
prévoir un deuxième support (60, 80) entre un premier support (35) et le pare-brise (34),
prévoir le deuxième support (80) en une forme telle que, par l'inversion de sa direction de montage verticale par rapport au premier support (35), l'angle de montage du pare-brise (34) est modifié de manière correspondante.
